# EUROPÄISCHE PATENTSCHRIFT

(11) **EP 1 919 733 B1**
(45) Veröffentlichungstag und Bekanntmachung des Hinweises auf die Patenterteilung: **22.09.2010**
(21) Anmeldenummer: 06778064.3
(22) Anmeldetag: 28.07.2006
(51) Int. Cl.: B60N 2/36

(54) **FAHRZEUGSITZ**
MOTOR VEHICLE SEAT
SIEGE DE VEHICULE

(30) Priorität: 30.08.2005 DE 102005041157
(43) Veröffentlichungstag der Anmeldung: 14.05.2008
(73) Patentinhaber: Ford Global Technologies, LLC, Dearborn, MI 48126 (US)
(72) Erfinder: SOMESCHAN, Robert, 42781 Haan (DE); WILDEY, Andrew, Harpenden, Herts AL5 4QS (GB); SCHWARZE, Nicole, 31655 Stadthagen (DE)
(74) Vertreter: Bonsmann, Joachim Bernhard
(86) Internationale Anmeldenummer: PCT/EP2006/064807
(87) Internationale Veröffentlichungsnummer: WO 2007/025820

(56) Entgegenhaltungen:
- DE-C1- 10 017 059
- FR-A1- 2 857 917
- US-A1- 2002 140 270

## Beschreibung

Die vorliegende Erfindung betrifft einen Fahrzeugsitz. Insbesondere betrifft die vorliegende Erfindung einen Fahrzeugsitz, welcher in Sitzanordnungen für Fahrzeuge mit wenigstens zwei und vorzugsweise drei hintereinander angeordneten Sitzreihen eine erhöhte Flexibilität hinsichtlich der Schaffung eines ebenen Ladebodens aufweist.

Die EP 100 17 059 C1 zeigt einen Fahrzeugsitz gemäß den Obenbegriff des Anspruchs 1. Im Stand der Technik sind diverse Anordnungen bekannt, um insbesondere in Fahrzeugen mit mehr als zwei Sitzreihen die Einstellbarkeit einer Ladeposition zu verbessern. Beispielsweise ist aus der DE 197 02 258 C2 eine Sitzanordnung mit zumindest einem Sitz mit Sitzteil und Rückenteil bekannt, die jeweils aus einer zur Aufnahme eines Insassen vorgesehenen ersten Gebrauchsstellung in eine eine in etwa ebene Ladefläche bildende zweite Gebrauchsstellung überführbar sind, wobei das Rückenteil zur Ermöglichung eines Zugangs zu einem Stauraum unterhalb der Ladefläche in seiner waagerechten zweiten Gebrauchsstellung nach oben schwenkbar ausgebildet ist.

Aus der DE 42 24 427 C2 ist ein Notsitz für Fahrzeuge mit Sitzteil und Rückenlehne bekannt, wobei die Rückseite der eine Lehnenplatte aufweisenden Rückenlehne bei in Nichtgebrauchsstellung befindlichem Notsitz einen Ladeflächenabschnitt bildet, der durch einen klappbar an der Oberseite der Rückenlehne angeschlossenen Brückenabschnitt ergänzt ist, während an die Unterseite der Lehnenplatte eine klappbar hinter der Rückenlehne dem Fahrzeugboden zugeordnete Abdeckplatte anschließt. Aus FR 2 857 917 A1 ist ein Sitzsystem bekannt, bei welchem die Rückenlehne in einem im Fahrzeugboden vorhandenen Hohlraum untergebracht und ein mit seitlich ausschwenkbaren Klappen versehenes,Bodenteil an der Rückenlehne so angebracht ist, dass der Hohlraum durch das Bodenteil in der eingefahrenen Position abgedeckt wird.

Aus EP 1 142 750 A2 ist eine Sitzanordnung für Fahrzeuge mit drei hintereinander angeordneten, aus mindestens zwei nebeneinanderliegenden Sitzen mit Sitzkissen und Rückenlehne zusammengesetzten Sitzreihen bekannt, bei der bei den Sitzen der dritten Sitzreihe die Sitzkissen um eine vordere Schwenkachse um 180° und die Rückenlehnen um eine an der Lehnenunterkante festgelegte Schwenkachse um 90° jeweils nach vorn schwenkbar sind. Zur Erzielung einer ebenen Ladefläche unabhängig von der designerischen Gestaltung der Rückseite der Rückenlehne der Sitze der zweiten Sitzreihe sind an den Unterseiten der Sitzkissen der dritten Sitzreihe flache Platten so angeordnet, dass diese mittels ausschieben (als Ausziehplatte) oder mittels Schwenken um eine quer zur Fahrzeuglängsrichtung verlaufende Schwenkachse auf die Rückseiten der abgeklappten Rückenlehnen der zweiten Sitzreihe auflegbar sind. Diese ermöglichen zwar in der konkreten Sitzanordnung die Schaffung einer ebenen Ladefläche, wobei jedoch diesbezüglich die Flexibilität hinsichtlich unterschiedlicher Bestuhlungen bzw. Sitzanordnungen der zweiten Sitzreihe eingeschränkt ist.

Eine Aufgabe der vorliegenden Erfindung besteht darin, einen Fahrzeugsitz bereitzustellen, welcher eine erhöhte Flexibilität hinsichtlich der Schaffung eines ebenen Ladebodens bei unterschiedlichen Sitzanordnungen in einem Fahrzeug aufweist.

Diese Aufgabe wird gemäß den Merkmalen des unabhängigen Patentanspruchs 1 gelöst.

Hierzu ist bei einem Fahrzeugsitz mit einem Sitzkissen und einer Rückenlehne, wobei im Einbauzustand des Fahrzeugsitzes in ein Fahrzeug entlang der Fahrzeuglängsrichtung die Rückenlehne um eine quer zur Fahrzeuglängsrichtung verlaufende Schwenkachse zur Bildung einer ebenen Ladefläche in Fahrtrichtung nach vorn schwenkbar ist und wobei der Fahrzeugsitz wenigstens eine Abdeckplatteneinrichtung aufweist, die im nach vorne geschwenkten Zustand der Rückenlehne zur Veränderung der ebenen Ladefläche verstellbar ist, die Abdeckplatteneinrichtung an der Rückseite der Rückenlehne angebracht und weist eine sich quer zur Fahrzeuglängsrichtung erstreckende Anordnung aus wenigstens zwei Plattenabschnitten auf, die im nach vorne geschwenkten Zustand der Rückenlehne zur Veränderung der ebenen Ladefläche unabhängig voneinander in Fahrzeuglängsrichtung bewegbar sind.

Dadurch, dass gemäß der Erfindung die wenigstens zwei Plattenabschnitte im nach vorne geschwenkten Zustand der Rückenlehne zur Veränderung der ebenen Ladefläche unabhängig voneinander in Fahrzeuglängsrichtung bewegbar sind, können diese Plattenabschnitte je nach Anordnung und aktueller Einstellung der Fahrtsitze in einer vor dem erfindungsgemäßen Fahrzeugsitz angeordneten Sitzreihe variabel eingestellt werden. Insbesondere können etwa in einer Sitzanordnung, bei der die Sitze aufeinander folgender Sitzreihen (z.B. der zweiten und der dritten Sitzreihe) zueinander versetzt angeordnet sind, die unabhängig voneinander bewegbaren Plattenabschnitte eines beispielsweise in der dritten Sitzreihe angeordneten erfindungsgemäßen Fahrzeugsitzes flexibel und unabhängig voneinander positioniert werden, je nachdem, ob sich die vor dem betreffenden Fahrzeugsitz angeordneten Sitze in Ladeposition (mit nach vom umgeklappter Rückenlehne) oder in Gebrauchsposition (mit nicht umgeklappter Rückenlehne) befinden.

Infolgedessen wird bei unterschiedlichen Sitzanordnungen eine erhöhte Flexibilität bei der Schaffung eines ebenen Ladebodens erzielt. Je nach den durch die Sitzstellung der vor dem erfindungsgemäßen Fahrzeugsitz angeordneten (z.B. zweiten) Sitzreihe bestimmten Möglichkeiten kann durch die unabhängig voneinander bewegbaren Plattenabschnitte jeweils eine Barriere für ein Nach-Vorne-Rutschen kleinerer Gegenstände beim Abbremsen des Fahrzeugs aus dem mit Hilfe der Abdeckplatteneinrichtung vergrößerten Laderaum in den Insassenraum geschaffen werden, wobei zugleich die insgesamt zur Verfügung stehende ebene Laderaumfläche der konkreten Sitzanordndung entsprechend maximiert und das Entstehen von Lücken oder Spalten auf der Ladefläche verhindert wird.

Gemäß einer bevorzugten Ausführungsform sind die wenigstens zwei Plattenabschnitte im nach vorne geschwenkten Zustand der Rückenlehne zur Veränderung der ebenen Ladefläche unabhängig voneinander um eine quer zur Fahrzeuglängsrichtung verlaufende Schwenkachse schwenkbar angebracht.

Gemäß einer weiteren bevorzugten Ausführungsform sind die wenigstens zwei Plattenabschnitte jeweils an einem dritten Plattenabschnitt schwenkbar angebracht, welcher seinerseits um eine an der Rückenlehnenoberkante der Rückenlehne festgelegte Schwenkachse schwenkbar angeordnet ist. Ein solcher dritter Plattenabschnitt kann beispielsweise im nach vorne geschwenkten Zustand auf der Unterseite des Sitzkissens zu liegen kommen, wenn das Sitzkissen, wie vorzugsweise der Fall, zum Herstellen der Ladeposition um eine quer zur Fahrzeuglängsrichtung verlaufende, nahe der in Fahrtrichtung vorderen Sitzkissenkante verlaufende Schwenkachse nach vorne schwenkbar ausgebildet ist.

Gemäß einer weiteren bevorzugten Ausführungsform ist entlang der Rückenlehnenunterkante der Rückenlehne ein vierter Plattenabschnitt um eine quer zur Fahrzeuglängsrichtung verlaufende Schwenkachse schwenkbar angebracht. Mittels eines solchen, in Ladeposition herabhängenden und vorzugsweise dabei in Kontakt mit dem Fahrzeugboden stehenden Plattenabschnitts kann ein Nach-Vorne-Rutschen kleinerer Gegenstände beim Abbremsen des Fahrzeugs auf dem Fahrzeugboden aus dem Laderaum in den Insassenraum blockiert werden, wobei infolge der Verschwenkbarkeit des Plattenabschnitts die Verstellbarkeit des Fahrzeugsitzes nicht beeinträchtigt wird.

Gemäß einer weiteren bevorzugten Ausführungsform ist der vierte Plattenabschnitt in Bezug auf die Befestigungsplatte in einem Winkelbereich schwenkbar, der zumindest den Bereich von 0° bis 270° umfasst.

Gemäß einer weiteren bevorzugten Ausführungsform sind der dritte Plattenabschnitt und/oder der vierte Plattenabschnitt an einer an der Rückseite der Rückenlehne fest montierten Befestigungsplatte schwenkbar angelenkt.

Gemäß einer weiteren bevorzugten Ausführungsform ist das Sitzkissen zum Herstellen der Ladeposition um eine quer zur Fahrzeuglängsrichtung verlaufende, nahe der in Fahrtrichtung vorderen Sitzkissenkante verlaufende Schwenkachse um ca. 180° derart nach vorne schwenkbar, dass zumindest der dritte Plattenabschnitt im nach vorne geschwenkten Zustand wenigstens teilweise auf der Unterseite des Sitzkissens zu liegen kommt., so dass eine ebene Ladefläche unabhängig von der Ausgestaltung der Unterseite des Sitzkissens hergestellt und darüber hinaus letztere auch vor Beschädigungen durch Ladegut geschützt wird.

Gemäß einer weiteren bevorzugten Ausführungsform sind die wenigstens zwei Plattenabschnitte relativ zueinander in einem Winkelbereich schwenkbar, der zumindest den Bereich von 0° bis 180° umfasst. Auf diese Weise kann, sofern die jeweilige Sitzanordnung und insbesondere die Sitzeinstellung vor dem erfindungsgemäßen Fahrzeugsitz dies ermöglicht, eine im Wesentlichen lückenlose und ebene Ladefläche im Bereich vor dem erfindungsgemäßen Fahrzeugsitz geschaffen werden.

Die Erfindung betrifft ferner eine Sitzanordnung in einem Fahrzeug mit wenigstens einem erfindungsgemäßen Fahrzeugsitz, sowie ein Fahrzeug mit einer solchen Sitzanordnung.

Weitere Ausgestaltungen der Erfindung sind der Beschreibung sowie den Unteransprüchen zu entnehmen.

Die Erfindung wird nachstehend anhand bevorzugter Ausführungsformen unter Bezugnahme auf die beigefügten Abbildungen näher erläutert. Es zeigen:
- Figur 1: eine schematische Perspektivansicht eines erfindungsgemäßen Fahrzeugsitzes in einer bevorzugten Ausführungsform;
- Figur 2-3: jeweils einen Ausschnitt aus einer Sitzanordnung mit einem erfin- dungsgemäßen Fahrzeugsitz mit voneinander unterschiedlichen Po- sitionen der Abdeckplatteneinrichtung; und
- Figur 4-5: eine schematische Perspektivansicht (Figur 4) und eine Seitenan- sicht (Figur 5) der vollständig auseinandergeklappten Abdeckplatten- einrichtung des Fahrzeugsitzes von Figur 1 bis 3.

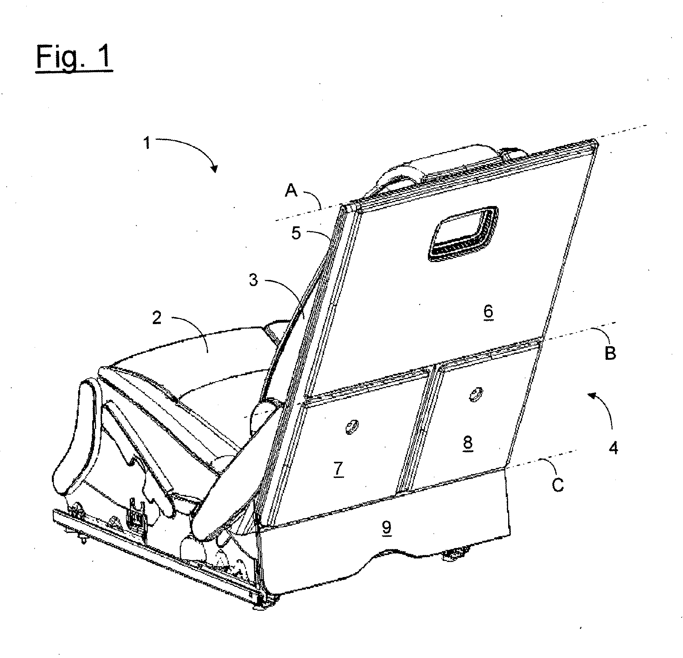

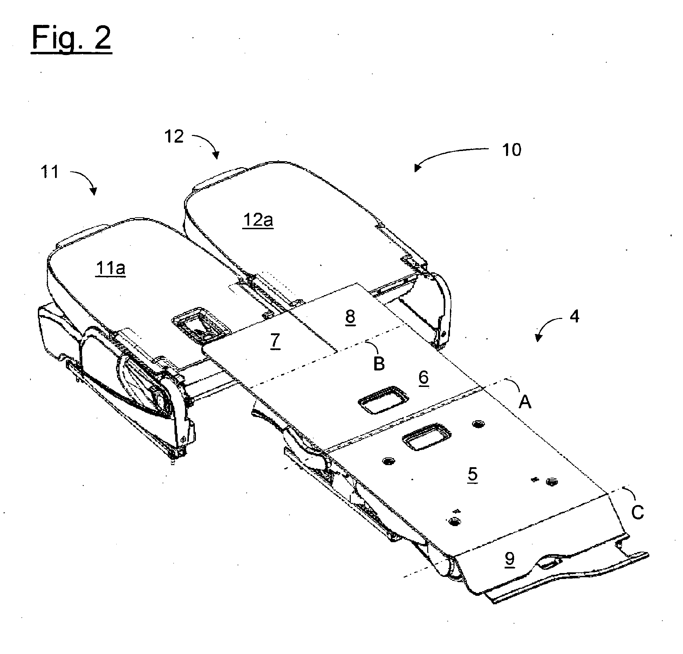

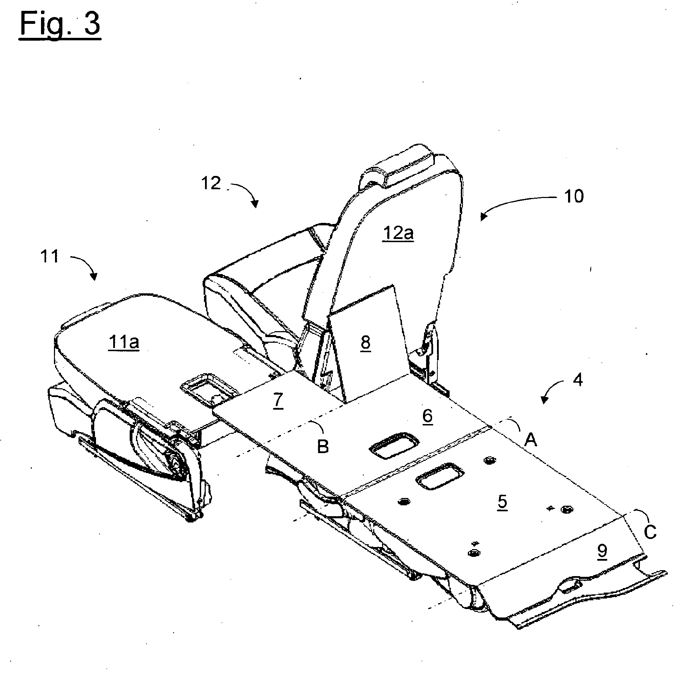

Fig. 1 zeigt einen erfindungsgemäßen Fahrzeugsitz 1 in einer bevorzugten Ausführungsform, welcher gemäß Fig. 2 und Fig. 3 in unterschiedlichen Positionen in einer ausschnittsweise dargestellten Sitzanordnung dargestellt ist. Im Ausführungsbeispiel gehört die Sitzanordnung zu einem (nicht dargestellten) Fahrzeug mit insgesamt drei hintereinander angeordneten Sitzreihen (z.B. einem "Mini-Van"), wobei jede Sitzreihe wenigstens zwei nebeneinander angeordnete Sitze aufweist. In Fig. 2 und Fig. 3 handelt es sich bei der Sitzreihe 10 (von der nur zwei Sitze 11 und 12 dargestellt sind) um die vom Fahrzeugbug aus gesehen zweite Sitzreihe des Fahrzeugs, und der Fahrzeugsitz 1 gehört der dritten Sitzreihe an (wobei zur einfacheren Darstellung auch hier auf die Abbildung weiterer Sitze verzichtet wurde). Im Ausführungsbeispiel sind die Sitze der zweiten und der dritten Sitzreihe zueinander versetzt angeordnet. Die Erfindung ist jedoch hierauf nicht beschränkt, sondern grundsätzlich in einem beliebigen Fahrzeug mit weniger oder mehr Sitzreihen sowie mit abweichenden Sitzanordnungen anwendbar.

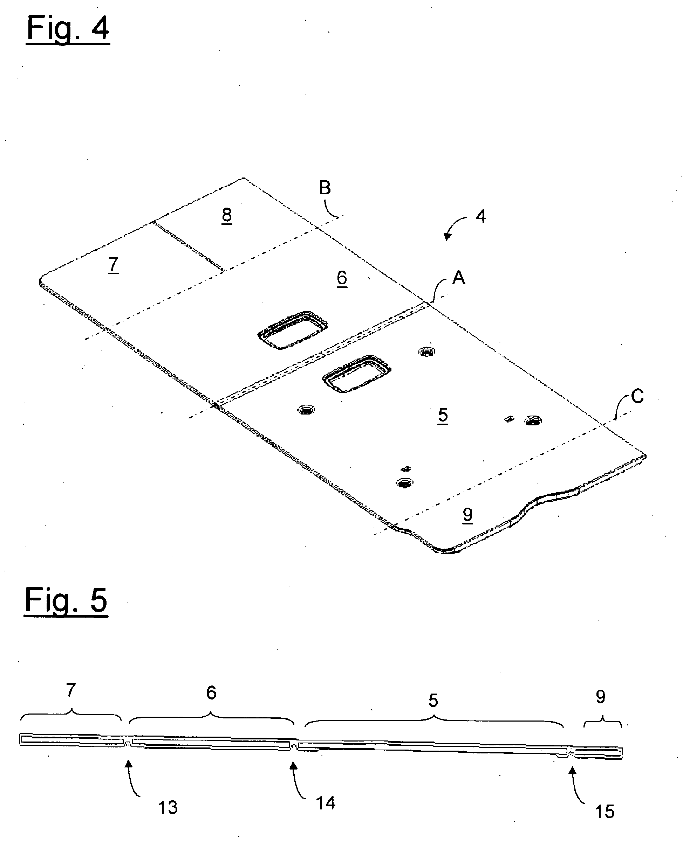

Der erfindungsgemäße Fahrzeugsitz 1 weist ein Sitzkissen 2, eine Rückenlehne 3 sowie eine Abdeckklappeneinrichtung 4 auf, die gemäß Fig. 1 an der Rückseite der Rückenlehne 3 angebracht ist und, wie am besten aus der Darstellung in Fig. 4 ersichtlich ist, mehrere nachfolgend detaillierter beschriebene Plattenabschnitte umfasst, welche mit einer Befestigungsplatte 5 verbunden sind, wobei die Befestigungsplatte 5 wie aus Fig. 1 erkennbar an der Rückseite der Rückenlehne 3 fest montiert wird.

Im Einzelnen weist die Abdeckklappeneinrichtung 4 gemäß Fig. 4 quer zur Fahrzeuglängsrichtung nebeneinander angeordnet einen ersten Plattenabschnitt 7 und einen zweiten Plattenabschnitt 8 auf, welche jeweils an einem dritten Plattenabschnitt 6 um eine quer zur Fahrzeuglängsrichtung verlaufende Schwenkachse "B" schwenkbar angeordnet sind. Die schwenkbare Anlenkung der Plattenabschnitte 7 und 8 an dem dritten Plattenabschnitt 6 erfolgt mittels beliebiger geeigneter Scharniereinrichtungen, wobei in der Seitenansicht von Fig. 5 die Position der Scharniereinrichtung 13 zur schwenkbaren Anlenkung des ersten Plattenabschnitts 7 an dem dritten Plattenabschnitt 6 erkennbar ist.

Das es zur Erzielung der erfindungsgemäßen Wirkung lediglich auf die unabhängige Bewegbarkeit der Plattenabschnitte 7 und 8 ankommt, ist die Erfindung nicht auf Anordnungen mit verschwenkbarer Anordnung dieser Plattenabschnitte beschränkt, wobei diese alternativ etwa auch in Form von Ausziehplatten realisiert werden können.

Wie ebenfalls aus Fig. 4 ersichtlich, ist der dritte Plattenabschnitt 6 seinerseits an der Befestigungsplatte 5 um eine ebenfalls quer zur Fahrzeuglängsrichtung verlaufende Schwenkachse "A" schwenkbar angeordnet, welche gemäß Fig. 1 an der Rückenlehnenoberkante der Rückenlehne 3 festgelegt ist. Des Weiteren ist entlang der gegenüberliegenden Kante der Befestigungsplatte 5 gemäß Fig. 1 und Fig. 4 ein vierter Plattenabschnitt 9 um eine ebenfalls quer zur Fahrzeuglängsrichtung verlaufende Schwenkachse "C" schwenkbar an der Befestigungsplatte 5 angebracht. Die schwenkbare Anlenkung des dritten Plattenabschnitts 6 und des vierten Plattenabschnitts 9 an der Befestigungsplatte 5 erfolgt wiederum mittels beliebiger geeigneter Scharniereinrichtungen 14 und 15, deren Position ebenfalls in der Seitenansicht von Fig. 5 dargestellt ist.

Zur Erläuterung des Einsatzes des erfindungsgemäßen Fahrzeugsitzes sind in Fig. 2 und Fig. 3 unterschiedliche Einstellungen der Sitzpositionen der Sitze 11 und 12 der zweiten Sitzreihe dargestellt. In der Anordnung von Fig. 2 befinden sich beide Sitze 11 und 12 in Ladeposition, wozu deren jeweilige Rückenlehnen 11a und 12a in Fahrtrichtung nach vorn geklappt sind. Hingegen befindet sich in der Anordnung von Fig. 3 nur der Sitz 11 in Ladeposition, während sich der Sitz 12 mit aufrechter Rückenlehne 12a in Gebrauchsposition (d.h. in einer zur Aufnahme eines Insassen auf seiner Sitzfläche bestimmten Position) befindet.

Sowohl in der Anordnung von Fig. 2 als auch in der Anordnung von Fig. 3 befindet sich der (gemäß Fig. 1 in seiner Gebrauchsposition mit aufrechter Rückenlehne 3 dargestellte) Fahrzeugsitz 1 in Ladeposition, wozu in dem Ausführungsbeispiel das Sitzkissen 2 um eine quer zur Fahrzeuglängsrichtung verlaufende, nahe der in Fahrtrichtung vorderen Sitzkissenkante verlaufende Schwenkachse um ca. 180° nach vorne geschwenkt und sodann die Rückenlehne 3 nach vorne in die waagerechte Position umgelegt ist. Selbstverständlich ist die Erfindung jedoch nicht auf Sitzsausführungen mit schwenkbarem Sitzkissen 2 beschränkt, sondern auch beispielsweise in Ausgestaltungen realisierbar, bei denen das Sitzkissen zur Herstellung der Ladeposition im Wesentlichen in seiner Gebrauchsposition verbleibt und die Rückenlehne beim Umlegen nach vorne lediglich auf dieser aufgelegt wird (wie in Fig. 2 für die Sitze 11 und 12 der zweiten Sitzreihe 10 gezeigt).

Um je nach Einstellung der Sitze 11 und 12 der zweiten Sitzreihe 10 eine möglichst optimierte Ladefläche zu schaffen, wird erfindungsgemäß die Anordnung der Plattenabschnitte 7 und 8 der Abdeckplatteneinrichtung 4 gemäß Fig. 2 und 3 entsprechend angepasst. Zunächst wird in beiden Fällen nach Umlegen der Rückenlehne 3 nach vorne und beginnend mit der in Fig. 1 gezeigten, "zusammengeklappten" Anordnung der Abdeckplatteneinrichtung 4 (nach Lösen etwaiger nicht dargestellter Befestigungsbänder oder Haltegurte der Abdeckplatteneinrichtung 4) der dritte Plattenabschnitt 6 mitsamt den daran schwenkbar angebrachten Plattenabschnitten 7 und 8 in Fahrtrichtung um die Schwenkachse "A" um etwa 180° so nach vorne geschwenkt, dass der dritte Plattenabschnitt 6 im nach vorne geschwenkten Zustand zumindest zum Teil auf der Unterseite des Sitzkissens 2 zu liegen kommt, wie aus der Darstellung in Fig. 2 und Fig. 3 erkennbar ist. Sodann werden der erste Plattenabschnitt 7 und der zweite Plattenabschnitt 8 ihrerseits um die Schwenkachse "B" nach vorne geklappt, so dass sie sich in Fahrtrichtung vor dem dritten Plattenabschnitt 6 befinden.

Das Umklappen des ersten Plattenabschnitts 7 und des zweiten Plattenabschnitts 8 erfolgt gemäß Fig. 2 derart, dass beide Plattenabschnitte 7 und 8 einen Winkel von etwa 180° zum dritten Plattenabschnitt 6 bilden, wobei der erste Plattenabschnitt 7 auf einem Teil der Rückseite der nach vorn geklappten Rückenlehne 11a des Sitzes 11 und der zweite Plattenabschnitt 8 auf einem Teil der Rückseite der nach vom geklappten Rückenlehne 12a des Sitzes 12 flach aufliegt, so dass jeweils ein ebener, im Wesentlichen (d.h. bis auf einen ggf. verbleibenden geringfügigen Spalt zwischen dem ersten Plattenabschnitt 7 und dem zweiten Plattenabschnitt 8) lückenloser Ladeboden zwischen dem Fahrzeugsitz 1 der dritten Sitzreihe und den Sitzen 11 und 12 der zweiten Sitzreihe 10 gebildet wird.

Hingegen erfolgt gemäß Fig. 3 das Umklappen des ersten Plattenabschnitts 7 und des zweiten Plattenabschnitts 8 derart, dass nur der erste Plattenabschnitt 7 einen Winkel von etwa 180° zum dritten Plattenabschnitt 6 bildet. Der zweite Plattenabschnitt 8 befindet sich zum dritten Plattenabschnitt 6 in einem Winkel kleiner als 180° und größer als 90°, so dass er in der aus Fig. 3 erkennbaren, schräg aufrechten Position an der Rückseite der aufrechten Rückenlehne 12a des in Gebrauchsposition befindlichen Sitzes 12 anliegt. Auch in dieser Einstellung bilden beide Plattenabschnitte 7 und 8 jeweils eine Barriere für ein Nach-Vorne-Rutschen kleinerer Gegenstände beim Abbremsen des Fahrzeugs aus dem mit Hilfe der Abdeckplatteneinrichtung 4 vergrößerten Laderaum in den Insassenraum, wobei zugleich die insgesamt zur Verfügung stehende ebene Laderaumfläche den (durch die Sitzstellung der zweiten Sitzreihe bestimmten) Möglichkeiten entsprechend maximiert wird.

In einer weiteren (nicht dargestellten) Anordnung befinden sich beide Sitze 11 und 12 der zweiten Sitzreihe 10 in Gebrauchsposition, in welchem Falle dann sowohl der erste Plattenabschnitt 7 als auch der zweite Plattenabschnitt 8 zum dritten Plattenabschnitt 6 in einem Winkel kleiner als 180° und größer als 90° angeordnet werden, so dass beide Plattenabschnitte 7 und 8 jeweils in (je nach Rückenlehnenstellung der Sitze 11 und 12 gleicher oder unterschiedlicher) schräg aufrechter Position an der jeweiligen Rückseite der aufrechten Rückenlehne 11a bzw. 12a des in Gebrauchsposition befindlichen Sitzes 12 bzw. 13 anliegen. Auch in dieser Einstellung bilden beide Plattenabschnitte 7 und 8 jeweils eine Barriere für ein Nach-Vorne-Rutschen kleinerer Gegenstände aus dem mit Hilfe der Abdeckplatteneinrichtung 4 vergrößerten Laderaum in den Insassenraum des Fahrzeugs.

Wie ferner aus Fig. 1-3 erkennbar, dient der in sämtlichen dargestellten Einstellungen des Fahrzeugsitzes 1 (d.h. sowohl in Gebrauchsposition gemäß Fig. 1 also auch in den Ladepositionen gemäß Fig. 2 und Fig. 3) herunterhängende und vorzugsweise dabei in Kontakt mit dem Fahrzeugboden stehende vierte Plattenabschnitt 9 ebenfalls dazu, ein Nach-Vorne-Rutschen kleinerer Gegenstände beim Abbremsen des Fahrzeugs aus dem Laderaum in den Insassenraum zu blockieren, ohne dass hierdurch die Verstellbarkeit des Fahrzeugsitzes 1 beeinträchtigt wird.

## Patentansprüche

1. Fahrzeugsitz mit einem Sitzkissen (2) und einer Rückenlehne (3), wobei im Einbauzustand des Fahrzeugsitzes (1) in ein Fahrzeug entlang der Fahrzeuglängsrichtung die Rückenlehne (3) um eine quer zur Fahrzeuglängsrichtung verlaufende Schwenkachse zur Bildung einer ebenen Ladefläche in Fahrtrichtung nach vom schwenkbar ist, und wobei der Fahrzeugsitz (1) wenigstens eine Abdeckplatteneinrichtung (4) aufweist, die im nach vorne geschwenkten Zustand der Rückenlehne (3) zur Veränderung der ebenen Ladefläche verstellbar ist,
**dadurch gekennzeichnet, dass**
die Abdeckplatteneinrichtung (4) an der Rückseite der Rückenlehne (3) angebracht ist und eine sich quer zur Fahrzeuglängsrichtung erstreckende Anordnung aus wenigstens zwei Plattenabschnitten (7, 8) aufweist, die im nach vorne geschwenkten Zustand der Rückenlehne (3) zur Veränderung der ebenen Ladefläche unabhängig voneinander in Fahrzeuglängsrichtung bewegbar sind.

2. Fahrzeugsitz nach Anspruch 1,
**dadurch gekennzeichnet, dass**
die wenigstens zwei Plattenabschnitte (7, 8) im nach vorne geschwenkten Zustand der Rückenlehne (3) zur Veränderung der ebenen Ladefläche unabhängig voneinander um eine quer zur Fahrzeuglängsrichtung verlaufende Schwenkachse (B) schwenkbar angebracht sind.

3. Fahrzeugsitz nach Anspruch 1 oder 2,
**dadurch gekennzeichnet, dass**
die wenigstens zwei Plattenabschnitte (7, 8) jeweils an einem dritten Plattenabschnitt (6) schwenkbar angebracht sind, welcher seinerseits um eine an der Rückenlehnenoberkante der Rückenlehne (3) festgelegte Schwenkachse (A) schwenkbar angeordnet ist.

4. Fahrzeugsitz nach einem der Ansprüche 1 bis 3,
**dadurch gekennzeichnet, dass**
entlang der Rückenlehnenunterkante der Rückenlehne (3) ein vierter Plattenabschnitt (9) um eine quer zur Fahrzeuglängsrichtung verlaufende Schwenkachse (C) schwenkbar angebracht ist.

5. Fahrzeugsitz nach Anspruch 3 oder 4,
**dadurch gekennzeichnet, dass**
der dritte Plattenabschnitt (6) und/oder der vierte Plattenabschnitt (9) an einer an der Rückseite der Rückenlehne (3) fest montierten Befestigungsplatte (5) schwenkbar angelenkt sind.

6. Fahrzeugsitz nach einem der vorhergehenden Ansprüche,
**dadurch gekennzeichnet, dass**
das Sitzkissen (2) zum Herstellen der Ladeposition um eine quer zur Fahrzeuglängsrichtung und nahe der in Fahrtrichtung vorderen Sitzkissenkante verlaufende Schwenkachse um ca. 180° derart nach vorne schwenkbar ist, dass zumindest der dritte Plattenabschnitt (6) im nach vorne geschwenkten Zustand wenigstens teilweise auf der Unterseite des Sitzkissens (2) zu liegen kommt.

7. Fahrzeugsitz nach einem der Ansprüche 2 bis 6,
**dadurch gekennzeichnet, dass**
die wenigstens zwei Plattenabschnitte (7, 8) relativ zueinander in einem Winkelbereich schwenkbar sind, der zumindest den Bereich von 0° bis 180° umfasst.

8. Fahrzeugsitz nach einem der Ansprüche 5 bis 7,
**dadurch gekennzeichnet, dass**
der vierte Plattenabschnitt (9) in Bezug auf die Befestigungsplatte (5) in einem Winkelbereich schwenkbar ist, der zumindest den Bereich von 0° bis 270° umfasst.

9. Sitzanordnung in einem Fahrzeug,
**dadurch gekennzeichnet, dass**
diese wenigstens einen Fahrzeugsitz (1) nach einem der vorhergehenden Ansprüche aufweist.

10. Sitzanordnung nach Anspruch 9,
**dadurch gekennzeichnet, dass**
diese wenigstens drei hintereinander angeordnete Sitzreihen mit jeweils wenigstens zwei nebeneinander angeordneten Fahrzeugsitzen aufweist, wobei wenigstens einer und vorzugsweise sämtliche Fahrzeugsitze der dritten Sitzreihe nach einem der Ansprüche 1 bis 8 ausgebildet sind.

11. Fahrzeug,
**dadurch gekennzeichnet, dass**
es eine Sitzanordnung nach Anspruch 9 oder 10 aufweist.

## Claims

1. A vehicle seat comprising a seat cushion (2) and a backrest (3), wherein in the condition of installation of the vehicle seat (1) in a vehicle along the longitudinal direction of the vehicle the backrest (3) is pivotable forwardly in the direction of travel about a pivot axis extending transversely relative to the longitudinal direction of the vehicle to form a flat load surface, and wherein the vehicle seat (1) has at least one cover plate device (4) which in the forwardly pivoted condition of the backrest (3) is displaceable for altering the flat load surface,
**characterised in that**
the cover plate device (4) is mounted to the rear side of the backrest (3) and has an arrangement, extending transversely relative to the longitudinal direction of the vehicle, which comprises at least two plate portions (7, 8) which in the forwardly pivoted condition of the backrest (3) are movable independently of each other in the longitudinal direction of the vehicle to alter the flat load surface.

2. A vehicle seat according to claim 1 **characterised in that** the at least two plate portions (7, 8) in the forwardly pivoted condition of the backrest (3) are mounted pivotably about a pivot axis (B) extending transversely to the longitudinal direction of the vehicle independently of each other to alter the flat load surface.

3. A vehicle seat according to claim 1 or claim 2 **characterised in that** the at least two plate portions (7, 8) are respectively mounted pivotably to a third plate portion (6) which in turn is arranged pivotably about a pivot axis (A) fixed to the upper edge of the backrest (3).

4. A vehicle seat according to one of claims 1 to 3 **characterised in that** a fourth plate portion (9) is mounted along the lower edge of the backrest (3) pivotably about a pivot axis (C) extending transversely relative to the longitudinal direction of the vehicle.

5. A vehicle seat according to claim 3 or claim 4 **characterised in that** the third plate portion (6) and/or the fourth plate portion (9) are mounted pivotably to a fixing plate (5) fixedly mounted to the rear side of the backrest (3).

6. A vehicle seat according to one of the preceding claims **characterised in that** to produce the loading position the seat cushion (2) is pivotable forwardly through about 180° about a pivot axis extending transversely relative to the longitudinal direction of the vehicle and near the seat cushion edge at the front in the direction of travel, in such a way that at least the third plate portion (6) comes to lie at least partially on the underside of the seat cushion (2) in the forwardly pivoted condition.

7. A vehicle seat according to one of claims 2 to 6 **characterised in that** the at least two plate portions (7, 8) are pivotable relative to each other in an angular range which includes at least the range of 0° to 180°.

8. A vehicle seat according to one of claims 5 to 7 **characterised in that** the fourth plate portion (9) is pivotable in relation to the fixing plate (5) in an angular range which includes at least the range of 0° to 270°.

9. A seat arrangement in a vehicle **characterised in that** it has at least one vehicle seat (1) according to one of the preceding claims.

10. A seat arrangement according to claim 9 **characterised in that** it has at least three rows of seats arranged one behind the other each having at least two mutually juxtaposed vehicle seats, wherein at least one and preferably all vehicle seats of the third row of seats are designed according to one of claims 1 to 8.

11. A vehicle **characterised in that** it has a seat arrangement according to claim 9 or claim 10.

## Revendications

1. Siège de véhicule avec un coussin de siège (2) et un dossier (3), dans lequel, en position de montage du siège de véhicule (1) dans un véhicule le long de la direction longitudinale du véhicule, le dossier (3) est apte à pivoter vers l'avant dans la direction de déplacement autour d'un axe de pivotement s'étendant transversalement à la direction longitudinale du véhicule pour former une surface de chargement plane, et dans lequel le siège de véhicule (1) présente au moins un système de plaques de recouvrement (4) qui, dans la position basculée vers l'avant du dossier (3), est réglable pour faire varier la surface de chargement, **caractérisé en ce que** le système de plaques de recouvrement (4) est installé au dos du dossier (3) et présente un agencement d'au moins deux parties de plaque (7, 8) s'étendant transversalement à la direction longitudinale du véhicule, qui, dans la position basculée vers l'avant du dossier (3), sont mobiles indépendamment l'une de l'autre dans la direction longitudinale du véhicule pour faire varier la surface de chargement plane.

2. Siège de véhicule selon la revendication 1, **caractérisé en ce que** lesdites au moins deux parties de plaque (7, 8) sont aptes à pivoter indépendamment l'une de l'autre autour d'un axe de pivotement (B) s'étendant transversalement à la direction longitudinale du véhicule, dans la position basculée vers l'avant du dossier (3), pour faire varier la surface de chargement plane.

3. Siège de véhicule selon la revendication 1 ou 2, **caractérisé en ce que** lesdites au moins deux parties de plaque (7, 8) sont chacune aptes à pivoter sur une troisième partie de plaque (6), qui est de son côté apte à pivoter autour d'un axe de pivotement (A) fixé au bord supérieur de dossier du dossier (3).

4. Siège de véhicule selon l'une quelconque des revendications 1 à 3, **caractérisé en ce qu'**une quatrième partie de plaque (9) est apte à pivoter le long du bord inférieur de dossier du dossier (3) autour d'un axe de pivotement (C) s'étendant transversalement à la direction longitudinale du véhicule.

5. Siège de véhicule selon la revendication 3 ou 4, **caractérisé en ce que** la troisième partie de plaque (6) et/ou la quatrième partie de plaque (9) sont articulées de façon pivotante sur une plaque de fixation (5) montée de façon fixe au dos du dossier (3).

6. Siège de véhicule selon l'une quelconque des revendications précédentes, **caractérisé en ce que**, pour créer la position de chargement, le coussin de siège (2) est apte à pivoter vers l'avant d'environ 180° autour d'un axe de pivotement s'étendant transversalement à la direction longitudinale du véhicule et à proximité du bord avant du coussin de siège dans la direction de déplacement, de telle manière qu'au moins la troisième partie de plaque (6) vienne se placer, dans la position basculée vers l'avant, au moins partiellement sur la face inférieure du coussin de siège (2).

7. Siège de véhicule selon l'une quelconque des revendications 2 à 6, **caractérisé en ce que** lesdites au moins deux parties de plaque (7, 8) sont aptes à pivoter l'une par rapport à l'autre dans une zone angulaire qui comprend au moins la plage de 0° à 180°.

8. Siège de véhicule selon l'une quelconque des revendications 5 à 7, **caractérisé en ce que** la quatrième partie de plaque (9) est apte à pivoter par rapport à la plaque de fixation (5), dans une zone angulaire qui comprend au moins la plage de 0° à 270°.

9. Agencement de sièges dans un véhicule, **caractérisé en ce qu'**il comporte au moins un siège de véhicule (1) selon l'une quelconque des revendications précédentes.

10. Agencement de sièges selon la revendication 9, **caractérisé en ce qu'**il comporte au moins trois rangées de sièges disposées l'une derrière l'autre, avec chaque fois au moins deux sièges de véhicule placés l'un à côté de l'autre, dans lequel au moins un siège de véhicule et de préférence tous les sièges de véhicule de la troisième rangée de sièges est/sont réalisé(s) selon l'une quelconque des revendications 1 à 8.

11. Véhicule, **caractérisé en ce qu'**il comporte un agencement de sièges selon la revendication 9 ou 10.
